# EUROPÄISCHE PATENTSCHRIFT

(11) **EP 3 275 773 B1**
(45) Veröffentlichungstag und Bekanntmachung des Hinweises auf die Patenterteilung: **10.07.2019**
(21) Anmeldenummer: 17170824.1
(22) Anmeldetag: 12.05.2017
(51) Int. Cl.: B62M 6/45, B60G 17/0165, B62K 25/08, B62K 25/30, B62J 99/00, B62L 1/00, B62M 6/40, B62K 25/04

(54) **VERFAHREN UND VORRICHTUNG ZUR AKTIVIERUNG EINES AKTUATORS AN EINEM ZWEIRAD**
METHOD AND DEVICE FOR ACTIVATING AN ACTUATOR ON A BICYCLE
PROCÉDÉ ET DISPOSITIF D'ACTIVATION D'UN ACTIONNEUR SUR UN DEUX-ROUES

(30) Priorität: 26.07.2016 DE 102016213683
(43) Veröffentlichungstag der Anmeldung: 31.01.2018
(73) Patentinhaber: Robert Bosch GmbH, 70442 Stuttgart (DE)
(72) Erfinder: Dasbach, Gregor, 72074 Tuebingen (DE)

(56) Entgegenhaltungen:
- EP-A1- 3 095 681
- DE-U1- 20 017 267
- US-A1- 2015 273 970
- Unknown: "Trial erste Informationen", TWN Club Zürich, 19. Januar 2013 (2013-01-19), XP055425122, http://www.twnclub.ch/old-site/trial-site/ trial-allgemein/trial-grundlagen/index.php Gefunden im Internet: URL:http://www.twnclub.ch/PDF-Dateien/tria l-grundlagen.pdf [gefunden am 2017-11-15]

## Beschreibung

Die Erfindung betrifft ein Verfahren sowie eine Vorrichtung zur Aktivierung wenigstens eines Aktuators an einem Zweirad.

### Stand der Technik

Sowohl auf der Fahrbahn befindliche Gegenstände als auch Bordsteine können für den ungeübten Fahrradfahrer eine nicht zu unterschätzende Gefahr darstellen. Zwar kann ein Überfahren des Gegenstands bzw. des Bordsteins folgenlos bleiben, jedoch besteht in jedem Fall eine Sturzgefahr.

Geübte Fahrradfahrer überwinden derartige Hindernisse, indem sie zu einem geeigneten Zeitpunkt das Vorderrad anheben oder sogar ganz darüber springen. Dies wird beispielsweise durch ein ziehen am Lenker realisiert oder durch einen Impuls nach unten, um den federnden Rückstoß eines Stoßdämpfers am Vorderrad zu nutzen. Diese Aktionen erfordern Kraft und Koordination vom Fahrer. Werden diese Techniken vom Fahrer nicht ausreichend beherrscht, kann es zu Unfällen kommen.

Die automatische Erkennung von Gegenständen bzw. Hindernissen auf der Fahrbahn wird beispielsweise in der nicht vorveröffentlichten DE 10 2016 200683 A1 beschrieben. Hierbei wird über die Erfassung des Zustands der Fahrbahn ein hinderliches Objekt erkannt und mittels einer Lampe beleuchtet, so dass der Fahrer gerade bei Nachtfahrten darauf aufmerksam gemacht wird.

Aus der DE 10 2014 216671 A1 ist dagegen eine Steuerung zur Verhinderung eines Sturzes bekannt, falls das Abheben eines Rades erkannt wird.

Aus der Schrift DE 200 17 267 U1 ist eine Fahrwerksregelung bekannt, bei der ein Fahrwerkselement mit zumindest einem Aktor vorgesehen ist. Dieser Aktor ist mit einem elektrischen Stellmotor ausgebildet, um das damit verbundene Feder- und Dämpferelement aktivieren zu können. Weiterhin ist ein Sensor vorgesehen, der beispielsweise eine vor dem Fahrzeug liegende Bodenwelle oder ein Schlagloch erkennen kann. Dabei kann der Aktor durch einen Zentralrechner derart angesteuert werden, dass das Rad zum richtigen Zeitpunkt, d.h. kurz nach dem Passieren der Bodenwelle, nach oben gezogen wird.

### Offenbarung der Erfindung

Die vorliegende Erfindung beansprucht ein Verfahren, eine Vorrichtung, die dieses Verfahren durchführt sowie ein Zweirad mit einer derartigen Vorrichtung zur Aktivierung eines Aktuators an dem Zweirad. Hierzu wird zunächst eine Aktivierungsvoraussetzung des Aktuators erfasst. Weiterhin wird wenigstens eine fahrdynamische Größe des Zweirads erfasst, die den Betrieb bzw. die Fahrt des Zweirads charakterisiert. Der Kern der Erfindung besteht dabei darin, dass der Aktuator, welcher im Bereich des Vorderrads vorgesehen ist, z.B. als Stoßdämpfer, erst dann aktiviert wird, wenn die Aktivierungsvoraussetzung vorliegt und die wenigstens eine fahrdynamische Größe die Aktivierung erlaubt. Durch die Aktivierung des Aktuators wird dabei zumindest ein kurzzeitiges Abheben oder Entlasten des Vorderrads von der Fahrbahn ermöglicht, so dass ein auf der Fahrbahn befindliches Hindernis übersprungen werden kann oder der Aufprall-Impuls gemindert wird.

Als fahrdynamische Größe kann dabei die Geschwindigkeit, die Beschleunigung, die Lenkrichtung und/oder die Gesamtmasse des Zweirads berücksichtigt werden, die durch geeignete Sensoren am Zweirad erfasst werden können. Weiterhin kann auch die Masseverteilung eine Rolle bei der Ansteuerung des Aktuators spielen. Mit diesen fahrdynamischen Größen kann beispielsweise erkannt werden, ob das Zweirad, z.B. ein Fahrrad oder ein Motorrad, einen Impuls besitzt, der groß genug ist, das (angehobene) Vorderrad über das Hindernis zu befördern. Darüber hinaus kann auch vorgesehen sein, dass der Zustand des Motors eines elektrisch antreibbaren Zweirads und/oder die Bremstätigkeit erfasst werden, um die Fahrdynamik bei der Aktivierung des wenigstens einen Aktuators zu berücksichtigen.

Die Aktivierungsvoraussetzung kann durch den Fahrer selbst erfüllt werden, indem er einen entsprechenden manuellen, optischen und/oder akustischen Befehl erteilt. Neben einer Spracheingabe und Gestensteuerung kann selbstverständlich auch die Aktivierung mittels eines Buttons, Knopfes oder Schalters erfolgen.

Alternativ oder zusätzlich kann auch eine automatische Erkennung einer (möglichen) Sprungsituation erfolgen. Hierzu ist es notwendig, dass das Zweirad Umfeldsensordaten mittels einer geeigneten Umfeldsensorik erfasst. Eine derartige Umfeldsensorik ist bereits im Fahrzeugbereich z.B. bei Parkassistenten und Fahrdynamikregelassistenten bekannt, weshalb hier nicht näher darauf eingegangen werden soll. Wie eingangs erwähnt, sind Umfeldsensorik-Maßnahmen mittlerweile auch für Zweiräder verwendbar. Mit Hilfe dieser Umfeldsensorik, z.B. einer Kamera oder einem Ultraschallsensorsystem kann auf der voraus befindlichen Fahrbahn ein Hindernis erkannt werden. Ist das Hindernis in einer Größenordnung, die mittels eines Sprung überwunden werden kann, so kann zumindest der erste Aktuator im Bereich des Vorderrads, z.B. ein ansteuerbarer Stoßdämpfer, derart aktiviert werden, dass er bei einer Fortführung der Fahrt einen Sprung initiiert. Die Fahrdynamik des Zweirads wird dann zumindest das Vorderrad über das Hindernis hinweg befördern. Um abzuschätzen, ob die Fahrdynamik ausreicht, das Hindernis mit dem Sprung zu überwinden, kann optional auch wenigstens eine der fahrdynamischen Größen berücksichtigt werden, um zu entscheiden, ob ein Sprung möglich ist.

Eine weitere Möglichkeit, die Voraussetzungen für eine Sprungsituation zu erfassen ist, dass das System auf Ortsinformationen z.B. von Kartenmaterial oder auf per Funk erhaltene Daten zurück greift. So ist denkbar, dass derart detaillierte Ortsinformationen verwendet werden, die schon vorab einen notwendigen Sprung anzeigen. Ein möglicher Einsatz wäre beispielsweise bei einem Cross- oder Querfeldein-Rennen, bei dem die befahrene Strecke vorab bekannt und ggf. durch den Fahrer und das System bereits (mehrfach) befahren und evtl. vermessen worden ist.

In einer weiteren Ausbildung der Erfindung kann auch vorgesehen sein, dass wenigstens ein zweiter Aktuator aktiviert wird, um den Sprung über das Hindernis zu ermöglichen. Dieser zweite Aktuator kann dabei im Bereich des Hinterrads und/oder im Sattelbereich vorgesehen sein und erreichen, dass sich auch das Hinterrad von der Fahrbahn abheben lässt. Es können am Zweirad auch mehrere Aktuatoren angebracht sein, die gemeinsam einen fließenden Ablauf des Sprungvorgangs ermöglichen. Hierzu ist jedoch eine Abstimmung der Aktivierung aller verwendeter Aktuatoren aufeinander notwendig.

Erfindungsgemäß ist zur Aktivierung des wenigstens ersten Aktuators bzw. zur Initiierung eines Ab-/Anhebens des (Vorder-) Rads des Zweirads eine Ansteuerung des Motors und optional einer Bremse des Zweirads vorgesehen. Diese zusätzliche Ansteuerung des Motors und optional der Bremse kann dazu führen, dass der Sprung unterstützt wird, z.B. indem zum richtigen Zeitpunkt der Motor aktiviert, dessen Leistung erhöht oder verringert wird. Entsprechend lässt sich auch durch einen geeigneten Bremszeitpunkt eine Dynamik auf dem Zweirad erzeugen, die einen Sprung unterstützt.

Als Aktuatoren an einem Zweirad, z.B. einem Fahrrad, eignen sich elektromechanische Aktuatoren, z.B. in Form eines Linearmotors. Es sind jedoch alternativ oder zusätzlich auch hydraulisch bzw. pneumatische Aktuatoren möglich. Derartige hydraulische bzw. pneumatische Aktuatoren sind in Form von Stoßdämpfern bei Fahrrädern bereits bekannt, indem ein Druckspeicher vorgesehen ist, der sich beim Einfedern füllt. Durch eine entsprechende aktive Ansteuerung des Stoßdämpfers bzw. des Druckspeichers kann somit eine Federbewegung ohne äußeren mechanischen Einfluss erzeugt werden.

Weitere Vorteile ergeben sich aus der nachfolgenden Beschreibung von Ausführungsbeispielen bzw. aus den abhängigen Patentansprüchen.

### Kurze Beschreibung der Zeichnungen

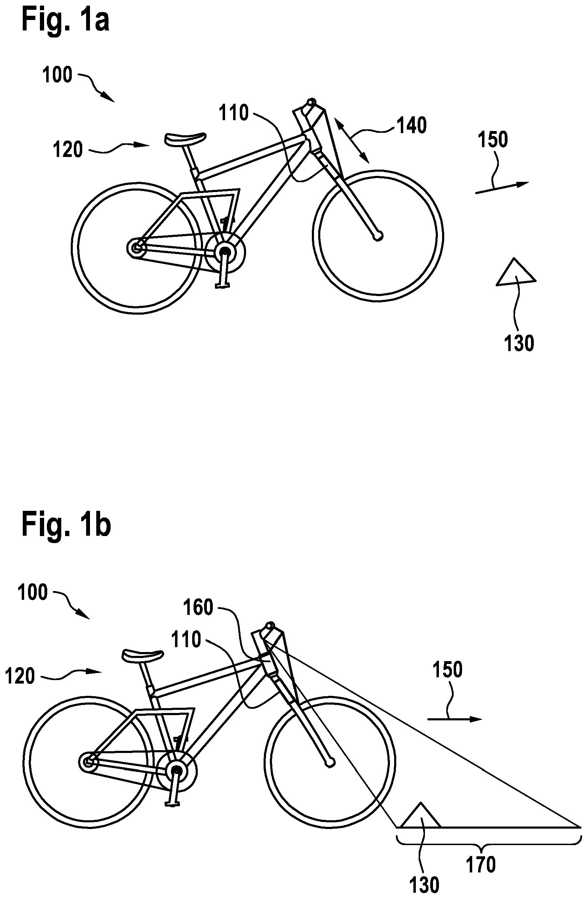

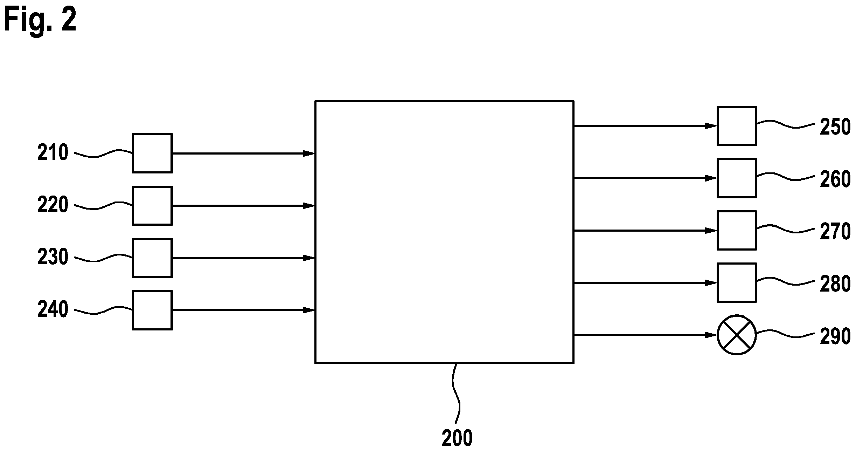

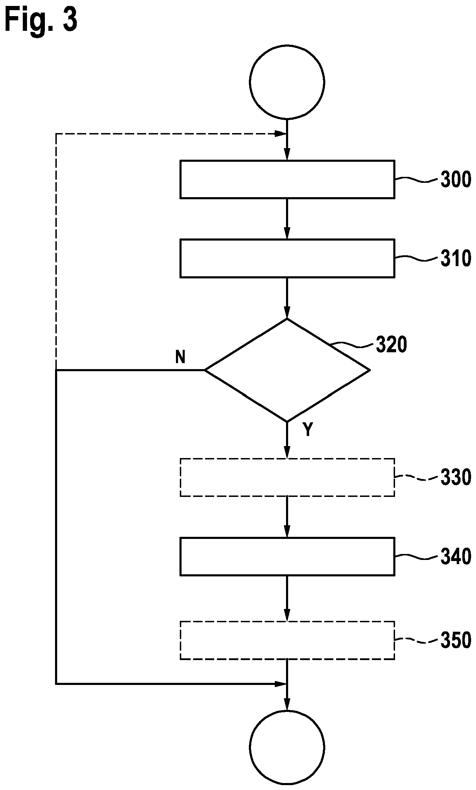

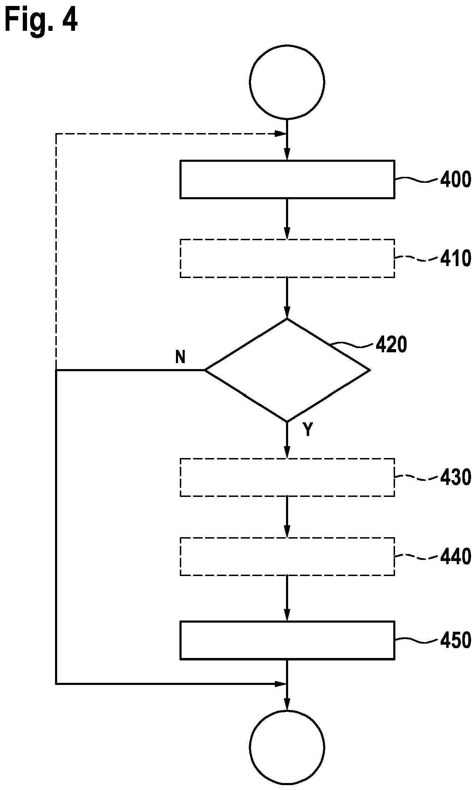

In den Figuren 1a bis d wird ein möglicher Sprung eines Fahrrads über ein Hindernis auf der Fahrbahn dargestellt, wie er mit der vorliegenden Erfindung realisiert werden kann. Die Figur 2 zeigt in einem Blockschaltbild eine mögliche Ausgestaltung der erfindungsgemäßen Vorrichtung. Die Figuren 3 und 4 zeigen zwei alternative Verfahren, denen die erfindungsgemäße Überlegung zugrunde liegt.

### Offenbarung der Erfindung

Wie eingangs bereits ausgeführt, bereitet es einigen ungeübten Zweiradfahrern, z.B. Radfahrern, Probleme, über Hindernisse auf der Fahrbahn hinweg zu kommen. Mit der vorliegenden Erfindung wird für diese Zweiradfahrer die Möglichkeit geschaffen, das Hindernis zu überwinden, ohne ausweichen zu müssen, bzw wenn ein Ausweichen nicht mehr möglich ist. Weiterhin verhindert die Erfindung auch die Beschädigung der Räder, z.B. bei der Überfahrt eines Bordsteins, indem rechtzeitig das Zweirad bzw. zumindest das Vorderrad über das Hindernis hinüber gelupft wird.

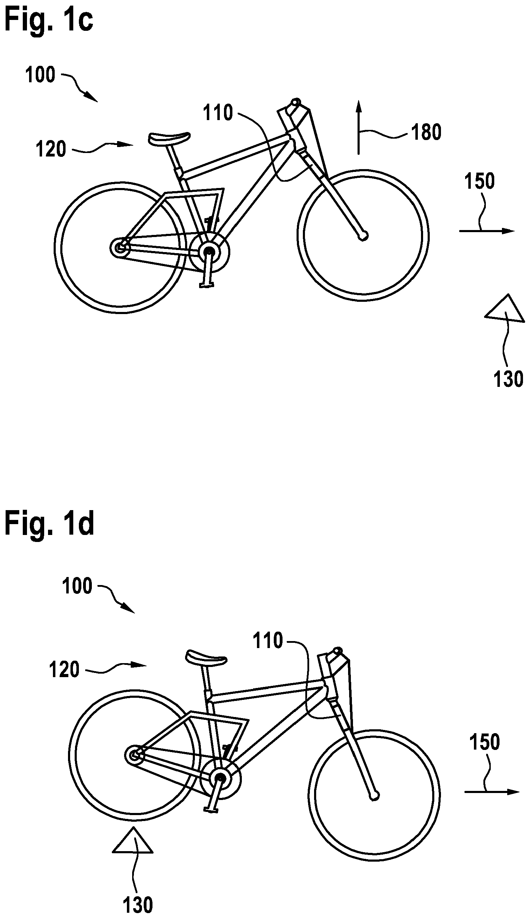

In der Abfolge der Figuren 1a bis d ist ein typischer Verlauf des erfindungsgemäßen Verfahrens dargestellt. Ein Zweirad 100 fährt in Richtung 150 auf ein Hindernis 130 zu (siehe Figur 1a). Durch die Erkennung der Hindernisses 130 wird ein Aktuator 110, z.B. ein Stoßdämpfer entweder automatisch oder manuell durch den Fahrer in seiner Länge 140 gestaucht. Die automatische Erkennung kann dabei mit einer Kamera im Bereich des Lenkers oder des Lenkrohrs 160 erreicht werden, die die Fahrbahn 170 vor dem Zweirad abscannt (siehe Figur 1b). Darüber hinaus sind jedoch auch andere Systeme zur Umfelderkennung wie beispielsweise Radar oder Ultraschall möglich. Durch die Erfassung wenigstens einer fahrdynamischen Größe, wie beispielsweise die Geschwindigkeit, kann die Steuereinheit zur Aktivierung des Aktuators 110 einen geeigneten Zeitpunkt bestimmen, an dem der Stossdämpfer von seiner gestauchten in die gestreckte Lage gebracht wird. Diese Streckung führt zu einem Aufwärtsimpuls 180, so dass das Vorderrad von der Fahrbahn abhebt (siehe Figur 1c). Durch die bestehende Fahrdynamik des Zweirads wird das Vorderrad über das Hindernis hinüber geleitet.

Optional kann ein weiterer Aktuator im Bereich des Hinterrads angebracht sein, der zum geeigneten Zeitpunkt auch das Hinterrad anhebt (siehe Figur 1d). Zusätzlich oder alternativ kann auch im Sattelbereich 120 ein Aktuator angebracht sein, der die Sprungfunktion im hinteren Bereich des Zweirads unterstützt.

Die Steuereinheit 200, wie sie beispielhaft in der Figur 2 dargestellt ist, erfasst mittels einer geeigneten Umfeldsensorik 220 zumindest die Fahrbahn vor dem Zweirad. Durch die Erfassung wenigstens einer fahrdynamischen Größe einer geeigneten Sensorik 230 kann die Steuereinheit 200 aus den so gewonnen Daten auf dem Fahrweg voraus befindliche Hindernisse oder Hürden erkennen. Erkennt die Steuereinheit 200, dass eine Aktivierung des ersten Aktuators 250 im Bereich des Vorderrads zur Überwindung des Hindernisses oder der Hürde, z.B. einem Bordstein, möglich ist, so steuert sie zu einem errechneten Zeitpunkt den ersten Aktuator 250 entsprechend an. Diese Ansteuerung kann auch auf einer entsprechenden Anzeige 290 dem Fahrer mitgeteilt werden. Auf dieser Anzeige 290 kann dem Fahrer auch mitgeteilt werden, dass die Steuereinheit 200 eine Aktivierung als zu gefährlich oder nicht möglich ansieht, um so eine Umfahrung oder einen Bremsvorgang zu ermöglichen.

Alternativ kann die Aktivierung des Aktuators 250 auch manuell durch den Fahrer erfolgen. Hierzu ist eine entsprechende Betätigungseinrichtung 210 vorgesehen, die in Form eines Buttons, eines Knopfes oder eines Schalters ausgestaltet sein kann. Optional kann hier auch eine Sprachsteuerung und/oder eine Gestensteuerung zum Einsatz kommen.

In einer weiteren Ausgestaltung kann vorgesehen sein, dass neben dem ersten Aktuator 250 wenigstens ein zweiter Aktuator 260, z.B. im Bereich des Hinterrads und/oder des Sattels verwendet wird, um die Sprungfunktion zu realisieren. Durch die Verwendung mehrere aufeinander abgestimmter Aktuatoren kann die Steuereinheit 200 das Überwinden des Hindernisses durch das komplette Zweirad steuern. Darüber hinaus ist auch die Verteilung der Aufwärtsimpulse zum Anheben des Zweirads auf mehrere Aktuatoren für den Fahrer in Form einer geschmeidigen und flüssigen Bewegung bemerkbar.

Weiterhin greift die Steuereinheit 200 bei einer vorgesehenen Aktivierung des wenigstens einen Aktuators 250 auch auf weitere Komponenten des Zweirads zu, um die Sprungaktion zu unterstützen. So wird der Motor 270 zu einem geeigneten Zeitpunkt aktiviert oder seine Leistung erhöht, um den Effekt des Sprungs zu steigern, da der so erzeugte Antriebsimpuls unterhalb des üblicherweise höher liegenden Massenschwerpunkts bei Fahrrädern liegt. Einen ähnlichen Effekt hat auch die zusätzliche Ansteuerung wenigstens einer Bremse 280 des Zweirads.

Zur Erkennung der Möglichkeit eines Sprungs sowie zur Ableitung des richtigen Zeitpunkts für die Aktivierung bzw. der Wahl für die korrekte Ansteuerung des Aktuators können mehrere fahrdynamische Größen erfasst werden. Neben der Geschwindigkeit des Zweirads (oder einzelner Teile des Zweirads, wie beispielsweise die Drehgeschwindigkeit des Vorderrads) kann auch die Beschleunigung, die Drehbewegung um eine der Achsen, die Lenkrichtung, die Gesamtmasse und/oder die Masseverteilung erfasst und berücksichtigt werden. Neben der Sensorik zur Erfassung der Bewegung kann auch wenigstens ein Gewichtssensor vorgesehen sein, z.B. im Bereich des Sattels und/oder am Gepäckträger. Die Erfassung der Masse ist insbesondere bei der Ermittlung des Schwerpunkts für den Sprung relevant.

In einem ersten Verfahrensbeispiel gemäß dem Flussdiagramm der Figur 3 wird zunächst eine automatische Erkennung eines Sprungvorgangs ausgeführt. Hierzu werden in einem ersten Schritt 300 die Daten für die Umfelderfassung erfasst. Im nächsten Schritt 310 wird wenigstens eine fahrdynamische Größe, z.B. die Geschwindigkeit erfasst. Je mehr fahrdynamische Größen erfasst werden, desto genauer ist die Ableitung der potentiellen Gefährdung durch ein Hindernis auf der Fahrbahn vor dem Zweirad. Darüber hinaus lässt sich auch durch eine höhere Genauigkeit bei der Erfassung der Fahrdynamik der Zeitpunkt zur Aktivierung des Aktuators genauer bestimmen. Im nachfolgenden Schritt 320 wird überprüft, ob aufgrund der vorliegenden Daten der Umfelderfassung und der Fahrdynamik ein Hindernis erkannt wird und ob eine Aktivierung des Aktuators ein Sprung über dieses Hindernis möglich ist. Falls kein Hindernis erkannt wird oder ein Sprung nicht aktiviert werden kann, wird das Verfahren beendet oder erneut mit Schritt 300 durchlaufen. In diesem Fall erweist es sich als vorteilhaft, wenn der Fahrer über die fehlende Möglichkeit zur Sprungaktivierung informiert wird, z.B. akustisch und/oder über eine Anzeige. Wird jedoch erkannt, dass zu einem vorbestimmten Zeitpunkt eine Aktivierung möglich ist, wird die Aktivierung des wenigstens ersten Aktuators im Bereich des Vorderrads im Schritt 340 durchgeführt. Durch die im Schritt 320 berechnete Möglichkeit zur Durchführung des Sprungs liegt bei der Aktivierung in Schritt 340 sowohl der Zeitpunkt als auch das Ausmaß der Ansteuerung bereits vor. Nach Durchführung des Sprungs wird das Verfahren beendet und kann erneut gestartet werden.

In einer alternativen Ausgestaltung dieses Verfahrens nach Figur 3 kann in einem weiteren Schritt 350 nach Schritt 340 wenigstens ein weiterer Aktuator angesteuert werden, z.B. um das Hinterrad anzuheben. Die Schritte 340 und 350 können jedoch auch gemeinsam durchgeführt werden, indem die Aktuatoren aufeinander abgestimmt angesteuert werden.

Erfindungsgemäß ist das Verfahren nach Figur 3 auch um eine Ansteuerung des Motors und optional wenigstens einer Bremse erweitert. Günstigenfalls erfolgt diese Ansteuerung nach der Entscheidung im Schritt 320 und vor der Aktivierung des wenigstens einen Aktuators im Schritt 340 in einem eigenen Schritt 330.

Im zweiten Verfahrensbeispiel gemäß der Figur 4 ist alternativ die Initiierung des Sprungs mittels eines Fahrerbefehls vorgesehen. So wird nach dem Start des Verfahrens in einem ersten Schritt 400 der Fahrerbefehl zur Aktivierung des wenigstens ersten Aktuators erfasst. Diese Erfassung kann mittels einer Bedieneinheit am Lenker des Zweirads aber auch mittels akustischer und/oder optischer Befehle erfolgen. Im nachfolgenden Schritt 420 kann dann, unabhängig von weiteren Erkenntnisse über Hindernisse oder Fahrdynamik, die Aktivierungsbedingung (=Fahrerbefehl) abgefragt werden. Wird kein Fahrerbefehl zur Aktivierung erkannt, wird das Verfahren beendet oder erneut mit Schritt 400 durchlaufen. Bei einem erkannten Fahrerbefehl wird im Schritt 450 der wenigstens erste Aktuator aktiviert, um einen Sprung durchzuführen.

Wie bereits im Verfahren gemäß der Figur 3 kann jedoch in einem weiteren Schritt 410 nach der Erfassung des Fahrerbefehls im Schritt 400 wenigstens eine fahrdynamische Größe erfasst werden. Diese fahrdynamische Größe kann bei der Entscheidung im nachfolgenden Schritt 420 herangezogen werden, um gegebenenfalls eine gewünschte Aktivierung bei Vorlage einer ungünstigen bzw. gefährlichen Fahrdynamik zu unterbinden. In Schritt 410 können dabei auch die Daten einer Umfelderfassung erfasst und bei der Entscheidung in Schritt 420 berücksichtigt werden. Optional kann auch die Erfassung der fahrdynamischen Größen erst nach der Entscheidung in Schritt 430 durchgeführt werden. Sowohl die im Schritt 410 erfassten fahrdynamischen Größen als auch die in Schritt 430 erfassten Größen können bei der Ansteuerung des wenigstens ersten Aktuators in Schritt 450 berücksichtigt werden, um gefährliche Situationen zu vermeiden. Ansonsten kann die Ansteuerung des einen oder der verschiedenen Aktuatoren entsprechend des Schritts 340 bzw. 350 erfolgen, bevor das Verfahren beendet wird.

Erfindungsgemäß ist in einem Schritt 440 vor der Aktivierung des wenigstens ersten Aktuators in Schritt 450 ebenfalls wie im Schritt 330 in Figur 3 der Motor und optional eine Bremse zur Unterstützung des Sprungvorgangs aktiviert.

## Patentansprüche

1. Verfahren zur Aktivierung eines Aktuators (110, 250, 260) mittels eines Steuereinheit (200) an einem elektrisch antreibbaren Zweirad (110),
wobei
• eine Aktivierungsvoraussetzung eines Aktuators (110, 250, 260) und
• wenigstens eine fahrdynamische Größen des Betriebs des Zweirads (100)
erfasst wird,
**dadurch gekennzeichnet, dass**
der erste Aktuator (110, 250) im Bereich des Vorderrads des Zweirads in Abhängigkeit der Aktivierungsvoraussetzung und der wenigstens einen fahrdynamischen Größe derart angesteuert wird, dass zumindest ein kurzzeitiges Abheben des Vorderrads von der Fahrbahn erfolgt,
wobei zusätzlich zur Aktivierung des wenigstens einen Aktuators der Motor (270) des elektrisch antreibbaren Zweirads derart angesteuert wird, dass er das Abheben unterstützt.

2. Verfahren nach Anspruch 1, **dadurch gekennzeichnet, dass** als fahrdynamische Größe,
• die Geschwindigkeit des Zweirads, und/oder
• die Beschleunigung des Zweirads, und/oder
• die Lenkrichtung des Zweirads, und/oder
• die Gesamtmasse des Zweirads, und/oder
• die Masseverteilung auf dem Zweirad
erfasst wird.

3. Verfahren nach Anspruch 1 oder 2, **dadurch gekennzeichnet, dass** als Aktivierungsvoraussetzung
• eine manuelle Eingabe des Fahrers, und/oder
• eine Sprungsituation in Abhängigkeit von erfassten Umfeldsensordaten, und/oder von Ortsinformationen aus Kartendaten
erfasst wird.

4. Verfahren nach Anspruch 3, **dadurch gekennzeichnet, dass** die Sprungsituation zusätzlich in Abhängigkeit von wenigstens einer fahrdynamischen Größe erfasst wird.

5. Verfahren nach einem der vorherigen Ansprüche, **dadurch gekennzeichnet, dass** in Abhängigkeit der Aktivierungsvoraussetzung und der wenigstens einen fahrdynamischen Größe zusätzlich ein zweiter Aktuator (260) angesteuert wird, insbesondere ein Aktuator im Bereich des Hinterrads, wobei die Ansteuerung des ersten und zweiten Aktuators derart aufeinander abgestimmt sind, dass ein Sprung des Zweirads (100) erfolgt.

6. Verfahren nach einem der vorherigen Ansprüche, **dadurch gekennzeichnet, dass** zusätzlich zur Aktivierung des wenigstens einen Aktuators wenigstens eine Bremse (280) derart angesteuert wird, dass sie das Abheben unterstützt.

7. Vorrichtung zur Aktivierung eines Aktuators an einem elektrisch antreibbaren Zweirad (100),
wobei eine Steuereinheit (200) vorgesehen ist, die ein Verfahren nach einem der Ansprüche 1 bis 6 durchführt, wobei die Steuereinheit (200)
• eine Aktivierungsvoraussetzung eines Aktuators (110, 250, 260) und
• wenigstens eine fahrdynamische Größe des Betriebs des Zweirads erfasst,
**dadurch gekennzeichnet, dass**
die Steuereinheit (200) den ersten Aktuator (110, 250) im Bereich des Vorderrads des Zweirads (100) in Abhängigkeit der Aktivierungsvoraussetzung und der wenigstens einen fahrdynamischen Größe derart ansteuert,
dass zumindest ein kurzzeitiges Abheben des Vorderrads von der Fahrbahn erfolgt,
wobei zusätzlich zur Aktivierung des wenigstens einen Aktuators der Motor (270) des elektrisch antreibbaren Zweirads (100) derart angesteuert wird, dass er das Abheben unterstützt.

8. Vorrichtung nach Anspruch 7, **dadurch gekennzeichnet, dass** die Steuereinheit (200) als Aktivierungsvoraussetzung
• eine manuelle Eingabe des Fahrers und/oder
eine Sprungsituation in Abhängigkeit von erfassten Umfeldsensordaten, und/oder von Ortsinformationen aus Kartendatenerfasst.

9. Vorrichtung nach Anspruch 8, **dadurch gekennzeichnet, dass** die Steuereinheit (200) die Sprungsituation zusätzlich in Abhängigkeit von wenigstens einer fahrdynamischen Größe erfasst.

10. Vorrichtung nach einem der Ansprüche 7 bis 9, **dadurch gekennzeichnet, dass** die Steuereinheit (200) in Abhängigkeit der Aktivierungsvoraussetzung und der wenigstens einen fahrdynamischen Größe zusätzlich einen zweiten Aktuator (260) ansteuert, insbesondere einen Aktuator im Bereich des Hinterrads, wobei die Ansteuerung des ersten und zweiten Aktuators (110, 250, 260) derart aufeinander abgestimmt sind, dass ein Sprung des Zweirads (100) erfolgt.

11. Vorrichtung nach einem der Ansprüche 7 bis 9, **dadurch gekennzeichnet, dass** zusätzlich zur Aktivierung des wenigstens einen Aktuators wenigstens eine Bremse (280) derart angesteuert wird, dass sie das Abheben unterstützt.

12. Elektrisch antreibbares Zweirad mit einer Steuereinheit (200) nach einem der Ansprüche 7 bis 11 und einem ersten Aktuator (110, 250) im Bereich des Vorderrads.

13. Zweirad nach Anspruch 12, **dadurch gekennzeichnet, dass** das Zweirad einen zweiten Aktuator (260) im Bereich des Hinterrads aufweist.

14. Zweirad nach einem der Ansprüche 12 oder 13, **dadurch gekennzeichnet, dass** der Aktuator (110, 250, 260) als elektromechanischer Aktuator und/oder als hydraulischer bzw. pneumatischer Aktuator ausgestaltet ist, insbesondere als Dämpferelement.

## Claims

1. Method for activating an actuator (110, 250, 260) by means of a control unit (200) on an electrically driveable bicycle (110), wherein
• an activation precondition of an actuator (110, 250, 260) and
• at least one vehicle movement dynamics variable of the operation of the bicycle (100),
are acquired,
**characterized in that**
the first actuator (110, 250) in the region of the front wheel of the bicycle is actuated as a function of the activation precondition and the at least one vehicle movement dynamics variable in such a way that at least brief lifting off of the front wheel from the carriageway takes place, wherein, in addition to the activation of the at least one actuator, the motor (270) of the electrically driveable bicycle is actuated in such a way that it assists the lifting off.

2. Method according to Claim 1, **characterized in that**
• the speed of the bicycle and/or
• the acceleration of the bicycle and/or
• the steering direction of the bicycle and/or
• the overall mass of the bicycle and/or
• the mass distribution on the bicycle are acquired as the vehicle movement dynamics variables.

3. Method according to Claim 1 or 2, **characterized in that**
• a manual input by the driver and/or
• a jump situation as a function of acquired environmental sensor data and/or location information from map data
are acquired as the activation precondition.

4. Method according to Claim 3, **characterized in that** the jump situation is additionally sensed as a function of at least one vehicle movement dynamics variable.

5. Method according to one of the preceding claims, **characterized in that** a second actuator (260), in particular an actuator in the region of the rear wheel, is additionally actuated as a function of the activation precondition and the at least one vehicle movement dynamics variable, wherein the actuation of the first actuator and the actuation of the second actuator are coordinated with one another in such a way that the bicycle (100) jumps.

6. Method according to one of the preceding claims, **characterized in that**, in addition to the activation of the at least one actuator, at least one brake (280) is actuated in such a way that it assists the lifting off.

7. Device for activating an actuator on an electrically driveable bicycle (100),
wherein a control unit (200) is provided which carries out a method according to one of Claims 1 to 6, wherein the control unit (200) acquires
• an activation precondition of an actuator (110, 250, 260) and
• at least one vehicle movement dynamics variable of the operation of the bicycle,
**characterized in that**
the control unit (200) actuates the first actuator (110, 250) in the region of the front wheel of the bicycle (100) as a function of the activation precondition and the at least one vehicle movement dynamics variable in such a way that at least brief lifting off of the front wheel from the carriageway takes place,
wherein, in addition to the activation of the at least one actuator, the motor (270) of the electrically driveable bicycle (100) is actuated in such a way that it assists the lifting off.

8. Device according to Claim 7, **characterized in that** the control unit (200) acquires
• a manual input by the driver and/or
a jump situation as a function of acquired environmental sensor data and/or location information from map data as the activation precondition.

9. Device according to Claim 8, **characterized in that** the control unit (200) senses the jump situation additionally as a function of at least one vehicle movement dynamics variable.

10. Device according to one of Claims 7 to 9, **characterized in that** the control unit (200) additionally actuates a second actuator (260), in particular an actuator in the region of the rear wheel, as a function of the activation precondition and the at least one vehicle movement dynamics variable wherein the actuation of the first actuator (110, 250) and the actuation of the second actuator (260) are coordinated with one another in such a way that the bicycle (100) jumps.

11. Device according to one of Claims 7 to 9, **characterized in that**, in addition to the activation of the at least one actuator, at least one brake (280) is actuated in such a way that it assists the lifting off.

12. Electrically driveable bicycle having a control unit (200) according to one of Claims 7 to 11 and a first actuator (110, 250) in the region of the bicycle.

13. Bicycle according to Claim 12, **characterized in that** the bicycle has a second actuator (260) in the region of the rear wheel.

14. Bicycle according to one of Claims 12 and 13, **characterized in that** the actuator (110, 250, 260) is configured as an electromechanical actuator and/or as a hydraulic or pneumatic actuator, in particular as a shock absorber element.

## Revendications

1. Procédé d'activation d'un actionneur (110, 250, 260) au moyen d'une unité de commande (200) au niveau d'un deux-roues (110) pouvant être propulsé électriquement,
* une condition d'activation d'un actionneur (110, 250, 260) et
* au moins une grandeur dynamique de déplacement du fonctionnement du deux-roues (100)
étant détectées,
**caractérisé en ce que**
le premier actionneur (110, 250) dans la zone de la roue avant du deux-roues est commandé en fonction de la condition d'activation et de l'au moins une grandeur dynamique de déplacement de telle sorte qu'au moins un soulèvement de courte durée de la roue avant de la chaussée a lieu
en plus de l'activation de l'au moins un actionneur, le moteur (270) du deux-roues pouvant être propulsé électriquement étant commandé de telle sorte qu'il assiste le soulèvement.

2. Procédé selon la revendication 1, **caractérisé en ce que** la grandeur dynamique de déplacement détectée est
* la vitesse du deux-roues et/ou
* l'accélération du deux-roues et/ou
* l'orientation de la direction du deux-roues et/ou
* la masse totale du deux-roues et/ou
* la distribution des masses sur le deux-roues.

3. Procédé selon la revendication 1, **caractérisé en ce que** la condition d'activation détectée est
* une saisie manuelle du conducteur et/ou
* une situation de saut en fonction de données de capteur d'environnement et/ou d'informations de lieu issues de données cartographiques.

4. Procédé selon la revendication 3, **caractérisé en ce que** la situation de saut est en plus détectée en fonction d'au moins une grandeur dynamique de déplacement.

5. Procédé selon l'une des revendications précédentes, **caractérisé en ce qu'**un deuxième actionneur (260) est en plus commandé en fonction de la condition d'activation et de l'au moins une grandeur dynamique de déplacement, notamment un actionneur dans la zone de la roue arrière, les commandes du premier et du deuxième actionneur étant accordées l'une sur l'autre de telle sorte qu'un saut du deux-roues (100) a lieu.

6. Procédé selon l'une des revendications précédentes, **caractérisé en ce qu'**en plus de l'activation de l'au moins un actionneur, au moins un frein (280) est commandé de telle sorte qu'il assiste le soulèvement.

7. Dispositif pour activer un actionneur au niveau d'un deux-roues (110) pouvant être propulsé électriquement,
une unité de commande (200) étant présente, laquelle met en oeuvre un procédé selon l'une des revendications 1 à 6, l'unité de commande (200) détectant
* une condition d'activation d'un actionneur (110, 250, 260) et
* au moins une grandeur dynamique de déplacement du fonctionnement du deux-roues,
**caractérisé en ce que**
l'unité de commande (200) commande le premier actionneur (110, 250) dans la zone de la roue avant du deux-roues en fonction de la condition d'activation et de l'au moins une grandeur dynamique de déplacement de telle sorte qu'au moins un soulèvement de courte durée de la roue avant de la chaussée a lieu
en plus de l'activation de l'au moins un actionneur, le moteur (270) du deux-roues (100) pouvant être propulsé électriquement étant commandé de telle sorte qu'il assiste le soulèvement.

8. Dispositif selon la revendication 7, **caractérisé en ce que** l'unité de commande (200) détecte comme condition d'activation
* une saisie manuelle du conducteur et/ou
une situation de saut en fonction de données de capteur d'environnement détectées et/ou d'informations de lieu issues de données cartographiques.

9. Dispositif selon la revendication 8, **caractérisé en ce que** l'unité de commande (200) détecte en plus la situation de saut en fonction d'au moins une grandeur dynamique de déplacement.

10. Dispositif selon l'une des revendications 7 à 9, **caractérisé en ce que** l'unité de commande (200) commande en plus un deuxième actionneur (260) en fonction de la condition d'activation et de l'au moins une grandeur dynamique de déplacement, notamment un actionneur dans la zone de la roue arrière, les commandes du premier et du deuxième actionneur (110, 250, 260) étant accordées l'une sur l'autre de telle sorte qu'un saut du deux-roues (100) a lieu.

11. Dispositif selon l'une des revendications 7 à 9, **caractérisé en ce qu'**en plus de l'activation de l'au moins un actionneur, au moins un frein (280) est commandé de telle sorte qu'il assiste le soulèvement.

12. Deux-roues pouvant être propulsé électriquement, comprenant une unité de commande (200) selon l'une des revendications 7 à 11 et un premier actionneur (110, 250) dans la zone de la roue avant.

13. Deux-roues selon la revendication 12, **caractérisé en ce que** le deux-roues comprend un deuxième actionneur (260) dans la zone de la roue arrière.

14. Deux-roues selon l'une des revendications 12 ou 13, **caractérisé en ce que** l'actionneur (110, 250, 260) est configuré sous la forme d'un actionneur électromécanique et/ou d'un actionneur hydraulique ou pneumatique, notamment sous la forme d'un élément amortisseur.
